# EUROPÄISCHE PATENTANMELDUNG

(11) **EP 1 855 061 A2**
(43) Veröffentlichungstag der Anmeldung: **14.11.2007**
(21) Anmeldenummer: 07102467.3
(22) Anmeldetag: 15.02.2007
(51) Int. Cl.: F24D 3/10

(54) **Armaturenbausatz zum Be- oder Nachfüllen von Heizungssystemen**

(30) Priorität: 09.05.2006 DE 102006021800; 08.05.2006 DE 102006021642
(71) Anmelder: HANS SASSERATH & CO KG, 41352 Korschenbroich (DE)
(72) Erfinder: Hecking, Willi, 41372, Niederkrüchten-Elmpt (DE)
(74) Vertreter: Weisse, Renate

(57) **Zusammenfassung**

Ein modularer Armaturenbausatz zum Aufbau einer Armatur über welche ein Heizungssystem füll- oder nachfüllbar ist besteht aus einer Armatur (Modul I) (10, 110, 210, 310) zum Einbau in eine Rohrleitung, enthaltend einen Einlass (12), der mittels ersten Absperrmitteln (24, 124, 224, 324) absperrbar ist, einen Auslass (14) der mittels zweiten Absperrmitteln (26, 126, 226, 326) absperrbar ist ein nicht-strömungsführendes Verbindungsstück (28) zum Verbinden des Einlasses (14) mit dem Auslass (16) und Anschlüssen (20, 22; 120, 122; 220, 222; 320, 322), die zwischen den Absperrmitteln vorgesehen sind, an welchen ein weiteres Modul (36, 50) (Modul II oder Modul III) lösbar anschließbar ist. Der Bausatz besteht weiterhin aus einem Rohrtrenner (50) (Modul II) und einer Wasserenthärtungseinrichtung (36) (Modul III) mit Anschlüssen, welche an die Anschlüsse der Armatur angepasst sind. Dabei weisen der Rohrtrenner (50) und die Wasscrcnthärtungscinrichtung (36) Anschlüsse auf, deren Abmessungen an die Anschlüsse der Armatur angepasst sind, so dass jedes Modul auf dem Strömungsweg zwischen den ersten (24, 124, 224, 324) und den zweiten Absperrmitteln (26, 126, 226, 326) angeordnet ist.

## Beschreibung

### Technisches Gebiet

Die Erfindung betrifft Armaturen, die beim Be- oder Nachfüllen oder zur Aufbereitung des Mediums von Heizungssystemen eingesetzt werden. Solche Armaturen sind insbesondere Rohrtrenner und Ionentauscher zur Wasserenthärtung.

Ein Rohrtrenner dient zum Trennen des Trinkwassersystems vom Heizungssystem. Das Heizungssystem wird aus einem Trinkwassersystem, der Trinkwasserleitung gefüllt oder nachgefüllt. Es muß unter allen Umständen verhindert werden, daß etwa bei einem Druckabfall im Trinkwassersystem Wasser aus dem Heizungssystem in das Trinkwassersystem zurückfließt. Zu diesem Zweck sind Rückflußverhinderer vorgesehen. Das sind federbelastete Rückschlagventile, die unter dem Einfluß des Trinkwasserdrucks nur in Richtung vom Trinkwassersystem zum Heizungssystem hin öffnen. Für den Dauerbetrieb wird jedoch auch dies nicht als ausreichend angesehen. Vielmehr ist nach Abschluß des Füll- oder Nachfüllvorganges eine physische Trennung zwischen Trinkwassersystem und Heizungssystem vorgeschrieben, beispielsweise durch Füllen oder Nachfüllen über einen Schlauch, der nach Abschluß des Füll- oder Nachfüllvorganges entfernt wird. Dadurch wird sichergestellt, daß auch über undichte Absperrventile oder Rückflußverhinderer kein Heizungswasser in das Trinkwassersystem gelangen kann.

### Stand der Technik

Da das Entfernen des Schlauchs nach dem Füll- oder Nachfüllvorgang lästig ist und auch nicht kontrolliert werden kann, sind feste Installationen von Rohrtrennern bekannt (beispielsweise EP 0 972 995 A1). Diese bekannten Rohrtrenner enthalten einen stromaufwärtigen, d.h. auf der Seite des Trinkwassersystems angeordneten, und einen stromabwärtigen, d.h. auf der Seite des Heizungswassersystems angeordneten Rückflußverhinderer. Beide Rückflußverhinderer öffnen in Richtung auf das Heizungswassersystem hin. Zwischen den Rückflußverhinderern ist ein druckgesteuertes Entlastungsventil angeordnet. Dieses Entlastungsventil ist von dem Trinkwasserdruck gesteuert und öffnet automatisch, wenn der Trinkwasserdruck wegfällt oder absinkt. Wenn somit das Heizungssystem aus dem Trinkwassersystem gefüllt oder nachgefüllt wird und ein dafür ausreichender Trinkwasserdruck vorhanden ist, dann wird das Entlastungsventil von diesem Druck geschlossen. Es fließt Trinkwasser über die von dem Trinkwasserdruck aufgedrückten Rückflußverhinderer in das Heizungssystem.

Wenn aber der Trinkwasserdruck unter ein vorgegebenes Maß absinkt, sei es, weil ein Absperrventil das Trinkwassersystem absperrt, sei es, weil der Trinkwasserdruck aus irgendeinem Grund zusammenbricht, öffnet das Entlastungsventil. Selbst wenn dann über einen lecken Rückflußverhinderer Heizungswasser aus dem Heizungswassersystem zurückfließt, fließt dieses zurückfließende Heizungswasser über den Ablauf ab und kann auf keinen Fall in das Trinkwassersystem gelangen.

In der DE 103 08 838.5 ist eine Rohrtrenner-Anordnung beschrieben, in der ein Rückflußverhinderer zusammen mit einem Entlastungsventil als Ganzes in einer Baugruppe aus einem Rohrtrennergehäuse herausziehbar sind. Die Armaturen ist fest in die Rohrleitung integriert. Zu Wartungszwecken müssen Absperrhähne geschlossen und die Armatur aus der Rohrleitung ausgebaut werden. Dies ist aufwändig.

Neben Rohrtrennern werden auch Wasseraufbereitungseinrichtungen in die Rohrleitung eingebaut um das Heizungssystem gegen Verkalkung oder Korrosion eine Verkalkung des Heizungssystems zu vermeiden. Auch diese sind fest in die Rohrleitung integriert.

Jede Armatur, die in die Rohrleitung eingebaut wird, stellt ein eigenes Bauteil dar, welches individuell gefertigt wird. Entsprechend ist der Investitionsaufwand für Werkzeuge, der Aufwand bei der Herstellung und bei der Lagerhaltung hoch.

### Offenbarung der Erfindung

Es ist Aufgabe der Erfindung, den Aufwand bei der Herstellung, Transport und Lagerhaltung zu verringern und die Wirtschaftlichkeit von Füllarmaturen zu erhöhen.

Erfindungsgemäß wird die Erfindung gelöst durch einen modularen Armaturenbausatz zum Aufbau einer Armatur der eingangs genannten Art, wobei der Armaturenbausatz besteht aus:
(I) einer Armatur (Modul I) zum Einbau in eine Rohrleitung, enthaltend
   (a) einen Einlass, der mittels ersten Absperrmitteln absperrbar ist
   (b) einen Auslass der mittels zweiten Absperrmitteln absperrbar ist
   (c) ein nicht-strömungsführendes Verbindungsstück zum Verbinden des Einlasses mit dem Auslass und
   (d) Anschlüsse, die zwischen den Absperrmitteln vorgesehen sind, an welchen ein weiteres Modul (Modul II oder Modul III) lösbar anschließbar ist;
(II) einem Rohrtrenner (Modul II) und
(III) einer Wasserenthärtungseinrichtung (Modul III) mit Anschlüssen, welche an die Anschlüsse der Armatur angepasst sind,
wobei der Rohrtrenner und die Wasserenthärtungseinrichtung Anschlüsse aufweisen, deren Abmessungen an die Anschlüsse der Armatur angepasst sind, so dass jedes angeschlossene Modul (II oder III) auf dem Strömungsweg zwischen den ersten und den zweiten Absperrmitteln angeordnet ist.

Mit einem solchen modularen Armaturenbausatz wird immer die gleiche Anschlußarmatur in die Rohrleitung eingebaut, an die entweder ein Rohrtrenner oder eine Wasserenthärtungseinrichtung angeschlossen wird. Die Anschlußarmatur kann auf diese Weise in höheren Stückzahlen mit dem gleichen Werkzeug und damit kostengünstiger gefertigt werden. Der Rohrtrenner und die Wasserenthärtungseinrichtung werden unabhängig von der Anschlußarmatur gefertigt und gelagert. Diese können dann einzeln ausgetauscht und gewartet werden. Auch dadurch erhöht sich die Wirtschaftlichkeit der Anordnung. Die Absperrmittel brauchen nicht ersetzt werden und können weiterverwendet werden. Der Rohrtrenner und die Wasserenthärtungseinrichtung haben Anschlüsse mit den gleichen Baumaßen, die an die Anschlußarmatur angepasst sind. Durch einfaches Absperren des Wasserflusses vor Ort mit den Absperrmitteln kann das angeschlossene Modul abgenommen werden. Die Rohrleitung selbst bleibt intakt. Wenn die Module nicht benötigt werden, kann die Verbindung in der Rohrleitung durch ein einfaches Übergangsstück hergestellt werden.

In einer Ausgestaltung der Erfindung ist die Armatur (Modul I) mit einem Wasserzähler versehen. Mit dem Wasserzähler kann die Menge des enthärteten Wassers ermittelt werden. Es sind aber auch Anwendungen bekannt, bei denen ein Rohrtrenner mit einem Wasserzähler ausgestattet werden müssen. Der Wasserzähler hat dann also eine doppelte Funktionalität. Der Wasserzähler ist ein integriertes Bauteil der Armatur, die in die Rohrleitung eingebaut wird. Entsprechend braucht bei Austausch der angeschlossenen Module II oder II der Wasserzähler nicht mit ausgetauscht werden.

In einer weiteren Ausgestaltung der Erfindung ist die stromabwärtigen Absperrmittel eine motorbetriebene Absperrung. Dann kann der Füll- und Nachfüllvorgang automatisch erfolgen. Das stromaufwärtige Absperrmittel ist dauerhaft in geöffneter Stellung. Es wird nur zum Ausbau und zur Wartung der Module geschlossen. Das stromabwärtige Absperrmittel wird, z.B. bei abfallendem Druck im Heizungssystem, geöffnet bis der Druck einen gewünschten Wert erreicht. Dann wird es wieder geschlossen. Dieser Vorgang kann mit dem motorbetriebenen Absperrventil automatisch erfolgen.

In einer weiteren Ausgestaltung der Erfindung ist die Wasserenthärtungseinrichtung (Modul III) zweiteilig ausgebildet, wobei ein erstes Teil ein Verschneideventil bildet, welches einerseits an die Anschlüsse der Armatur (Modul I) anschließbar ist, die mit einer steuerbaren Bypassleitung verbunden sind, und andererseits Anschlüsse für ein zweites Teil der Wasserenthärtungseinrichtung aufweist, wobei das zweite Teil eine wasserenthärtende Einrichtung, insbesondere ein Ionentauscher ist.

Das durch den Wasserenthärter geleitete Wasser hat immer einen konstanten, niedrigen Härtegrad. Mit einer solchen Anordnung kann die Teilmenge des auf diesen Wert enthärteten Wassers eingestellt werden. Die übrige Strömung wird durch den Bypass geleitet. Auf diese Weise wird Wasser mit wählbarem Gesamthärtegrad zum Füllen und Nachfüllen verwendet.

Für die Vielzahl von Kombinationen sind lediglich 6 verschiedene Bauteile erforderlich: Eine Armatur mit zwei handbetätigten Absperrhähnen mit und ohne Wasserzähler, Eine Armatur mit einer automatischen Absperrung mit und ohne Wasserzähler, eine Wasserenthärtungseinrichtung und ein Rohrtrenner.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Ansicht einer Anschlußarmatur (Modul I) mit zwei handbetätigten Absperrhähnen.
- Fig.2: ist eine geschnittene Ansicht der Anschlußarmatur aus Fig.1.
- Fig.3: ist eine teilweise perspektivische Ansicht der Anschlußarmatur aus Fig.1 mit einer daran angeschlossenen Wasserenthärtungseinrichtung (Modul III).
- Fig.4: zeigt die vollständige Anordnung aus Fig.3.
- Fig.5: ist eine perspektivische Ansicht einer Wasserenthärtungseinrichtung mit einem Verschneideventil.
- Fig.6: ist eine Draufsicht auf die Wasserenthärtungseinheit aus Fig.5.
- Fig.7: zeigt das Verschneideventil aus Fig.5 entlang einer Schnittlinie B-B in Fig.6
- Fig.8: ist ein Querschnitt durch die Anschlußarmatur aus Fig.1 mit einem daran angeschlossenen Rohrtrenner mit Druckminderer (Modul II).
- Fig.9: zeigt die Anordnung aus Fig.8 in perspektivischer Darstellung.
- Fig.10: ist eine perspektivische Ansicht einer Anschlußarmatur (Modul I) mit zwei handbetätigten Absperrhähnen und einem dazwischen angeordneten Wasserzähler.
- Fig.11: ist eine geschnittene Ansicht der Anschlußarmatur aus Fig.10.
- Fig.12: ist eine teilweise Seitenansicht der Anschlußarmatur aus Fig.10 mit einer daran angeschlossenen Wasserenthärtungseinrichtung (Modul III).
- Fig.13: zeigt die vollständige Anordnung aus Fig.12.
- Fig.14: ist eine perspektivische Darstellung der Anschlußarmatur aus Fig,10 mit einem daran angeschlossenen Rohrtrenner mit Druckminderer.
- Fig.15: zeigt eine Seitenansicht auf die Anordnung aus Fig.14.
- Fig.16: ist eine perspektivische Ansicht einer Anschlußarmatur (Modul I) mit einem handbetätigten Absperrhahn und einer motorbetriebenen, automatischen Absperrung.
- Fig.17: ist eine geschnittene Ansicht der Anschlußarmatur aus Fig.16.
- Fig.18: ist eine Seitenansicht der Anschlußarmatur aus Fig.16 mit einem daran angeschlossenen Rohrtrenner mit Druckminderer.
- Fig. 19: ist eine perspektivische Ansicht auf die Anordnung aus Fig.19.
- Fig.20: ist eine perspektivische Ansicht einer Anschlußarmatur (Modul I) mit einem handbetätigten Absperrhahn, einer motorbetriebenen, automatischen Absperrung und einem dazwischen angeordneten Wasserzähler.
- Fig.21: ist eine geschnittene Ansicht der Anschlußarmatur aus Fig.20.
- Fig.22: ist eine perspektivische Darstellung der Anschlußarmatur aus Fig.20 mit einem daran angeschlossenen Rohrtrenner mit Druckminderer.
- Fig.23: zeigt eine Seitenansicht auf die Anordnung aus Fig.22.

### Beschreibung der Ausführungsbeispiele

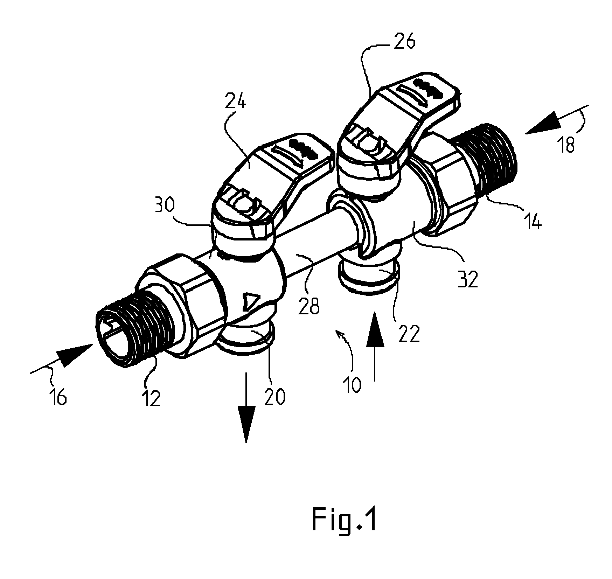

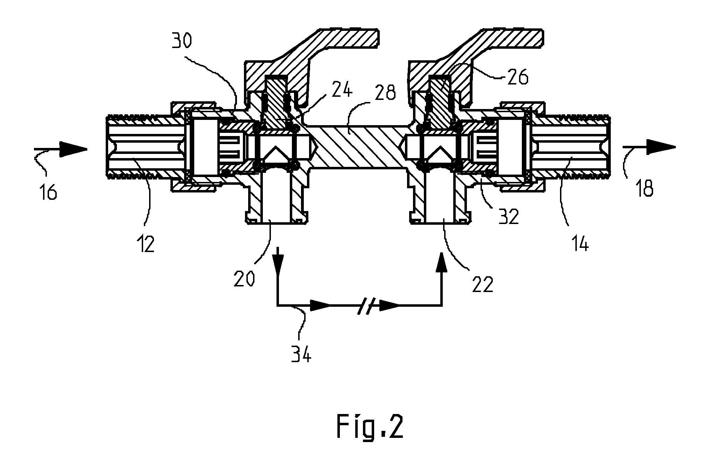

In Fig.1 und Fig. 2 ist ein erstes Modul 10 eines modularen Armaturenbausatzes in Form einer Anschlußarmatur dargestellt. Das Modul 10 wird in eine nicht dargestellte Rohrleitung eingebaut. Ein Einlass 12 wird mit einer Trinkwasserversorgung verbunden. Das Wasser strömt in Richtung des Pfeils 16 in die Armatur. Auf der Seite eines Auslasses 14 fließt das Wasser in Richtung des Pfeils 18 in ein Heizungssystem (nicht dargestellt).

Das Wasser fließt durch einen ersten Anschluß 20 aus dem Modul 10 heraus und über einen zweiten Anschluß 22 wieder in das Modul herein. Zwischen den Anschlüssen 20 und 22 wird ein weiteres Modul II oder III des modularen Armaturenbausatzes eingesetzt.

Am Einlass 12 und Auslass 14 sind jeweils manuell betätigbare Absperrhähne 24 bzw. 26 vorgesehen. Solche Absperrhähne können zum Beispiel Kugelhähne sein. Das zum Einlass 12 gehörige Armaturengehäuse 30 mit Absperrhahn 24 und Anschluss 20 ist über ein nicht-strömungsführendes Verbindungsteil 28 mit dem zum Auslass 14 gehörigen Armaturengehäuse 32 mit Absperrhahn 26 und Anschluss 22 verbunden. Dadurch wird das Modul 10 in einem Bauteil verwirklicht. Im vorliegenden Ausführungsbeispiel sind Einlass und Auslass koaxial zueinander und mit dem Verbindungsteil 28 angeordnet. Die Anschlüsse verlaufen senkrecht zu deren Verbindungsachse, wie dies in Fig. 1 dargestellt ist.

Zum Entfernen eines an die Anschlüsse dieses Moduls 10 angeschlossenen Moduls können die Absperrhähne 24 und 26 geschlossen werden. Das angeschlossene Modul kann dann einfach abgenommen werden.

Das Wasser fließt von der Trinkwasserversorgung über den Einlass 12 durch das Gehäuse 30 mit dem Absperrhahn. Vom Anschluss 20 fließt es in Richtung der Pfeile 34 (Fig.2) zum Anschluss 22 im Gehäuse 32 mit Absperrhahn 26. Von dort fließt es zum Auslass 14.

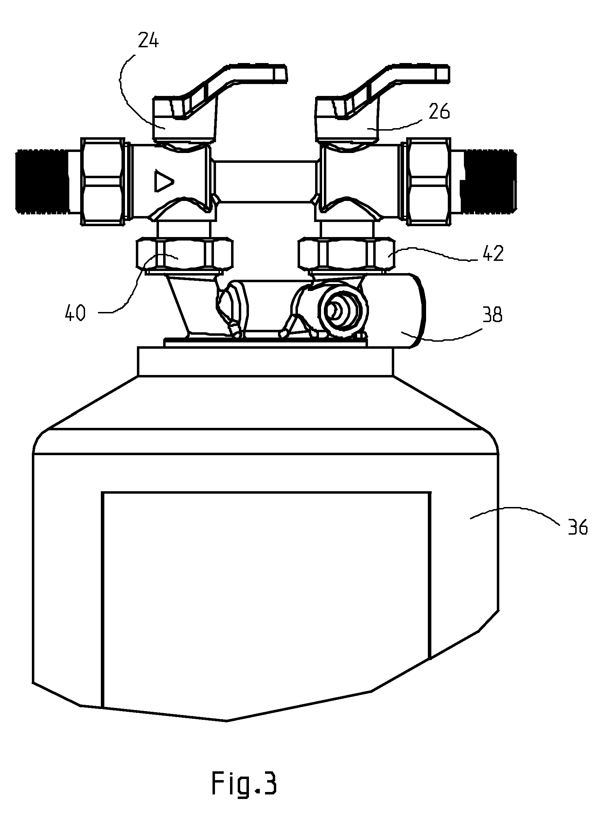

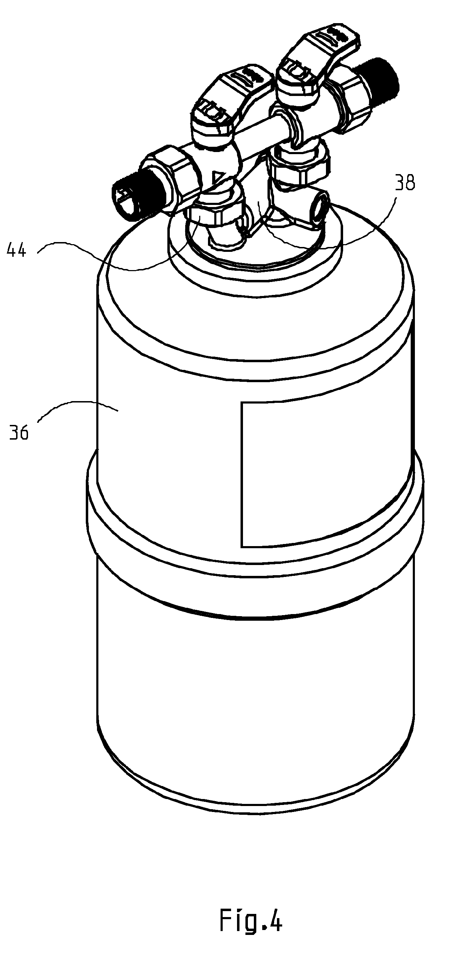

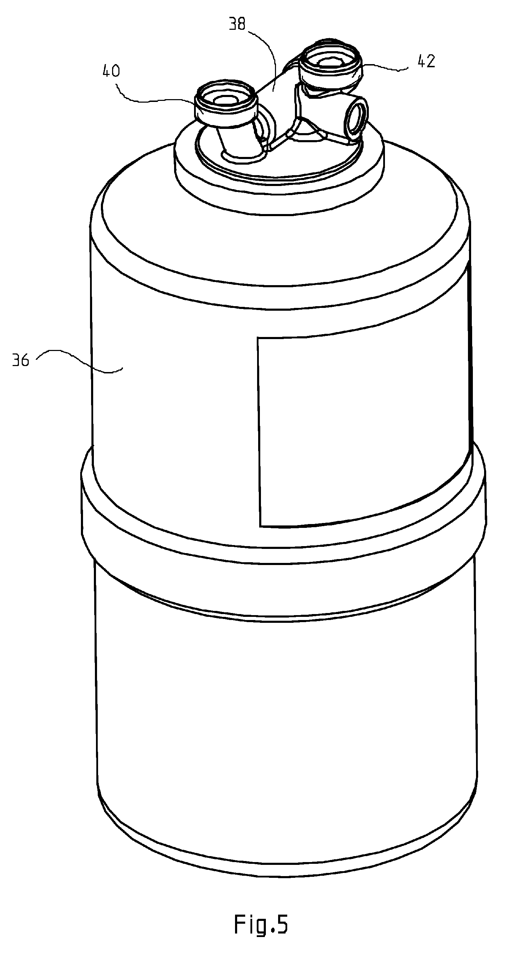

In Fig.3 bis 7 ist eine Wasserenthärtungseinrichtung 36 dargestellt, die über ein Verschneideventil 38 an die Anschlußarmatur 10 angeschlossen ist. Zu diesem Zweck weist das Verschneideventil 38 zwei Anschlußstutzen 40 und 42 auf. Größe und Geometrie der Anschlußstutzen 40 und 42 sind so gewählt, daß sie mit Überwurfmuttern 44 mit einem geeigneten Gewinde an den Anschlüssen 20 und 22 der Anschlußarmatur befestigt werden können.

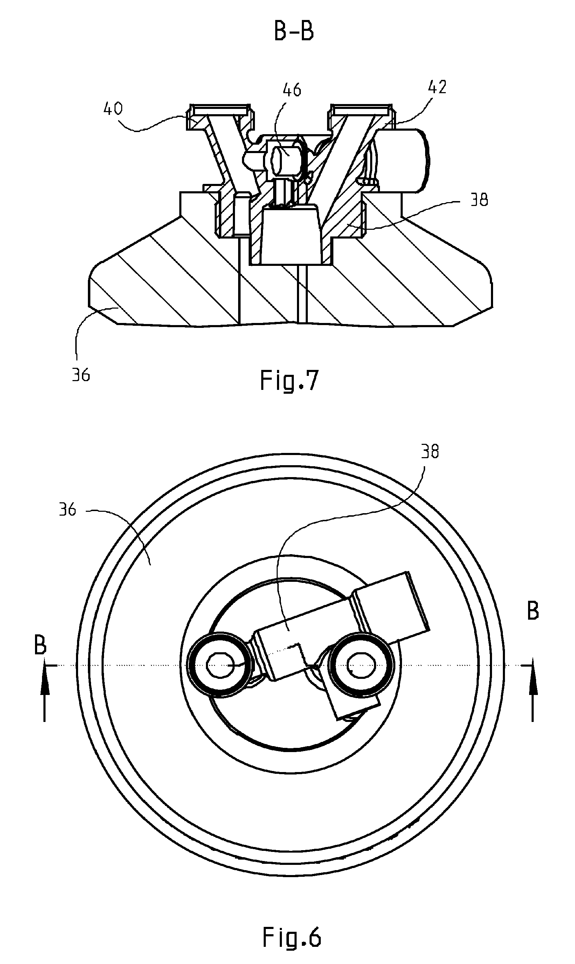

In Fig.7 ist erkennbar, wie das Wasser durch die Anordnung fließt. Vom Anschlußstutzen 40 fließt ein Teil des Wassers in die Wasserenthärtungseinrichtung 36. Dort wird das Wasser auf einen niedrigen Härtegrad enthärtet. Anschließend fließt es zum Anschlußstutzen 42. Ein weiterer Teil des Wassers fließt ohne Enthärtung durch einen Bypass 46 direkt zum Anschlußstutzen 42. Dort werden die Wasserströme wieder zusammengeführt. Es ergibt sich ein gewünschter Gesamthärtegrad.

Wenn der Ionentauscher der Wasserenthärtungseinrichtung 36 ausgewechselt werden muß, werden die Absperrhähne 24 und 26 geschlossen. Die Überwurfmuttern werden gelöst und die Wasserenthärtungseinrichtung 36 kann problemlos ersetzt oder erneuert werden.

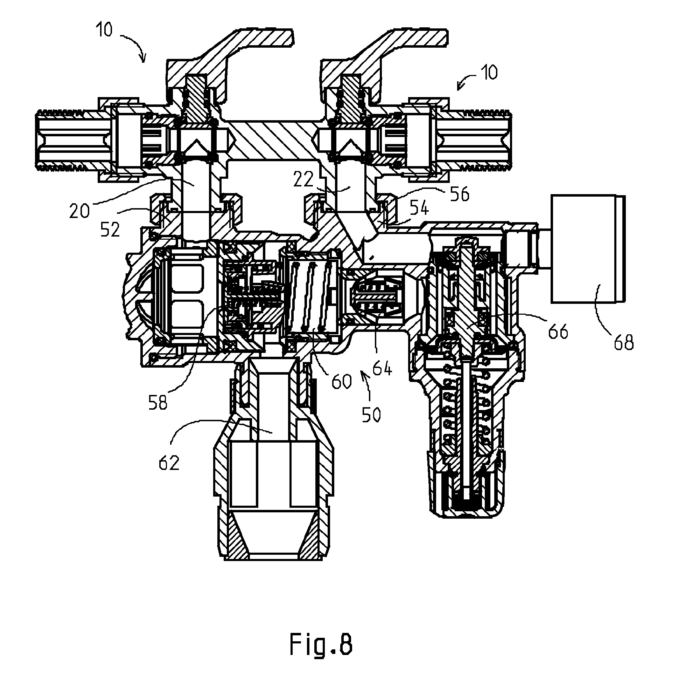

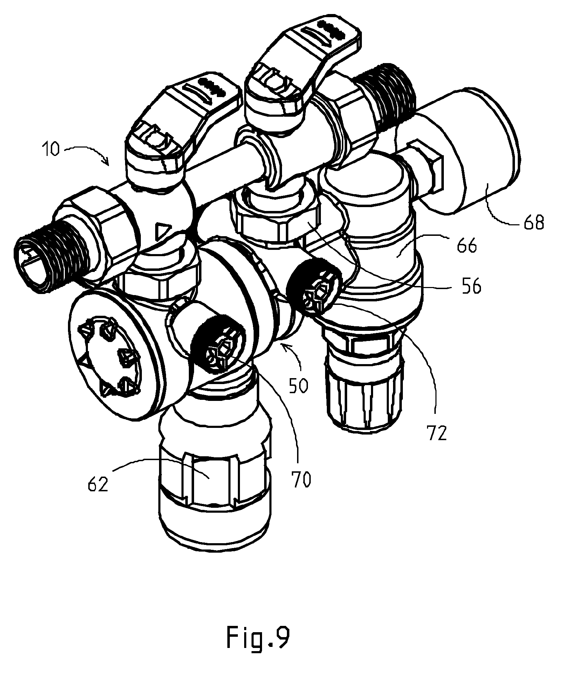

In den Figuren 8 und 9 ist eine Anordnung mit anderer Verwendung gezeigt. Die Anschlußarmatur 10 ist die gleiche, wie in den Figuren 1 bis 7. An diese Anschlußarmatur 10 ist eine allgemein mit 50 bezeichnete Rohrtrenneranordnung (Modul II) angeschlossen.

Die Rohrtrenneranordnung 50 ist bekannt und braucht daher nicht detailiert beschrieben werden. Die Anordnung 50 wird mittels zweier Anschlußstutzen 52 und 54 auf die gleiche Weise an die Anschlußarmatur 10 angeschlossen, wie oben anhand der Wasserenthärtungseinrichtung 36 beschrieben.

Das Wasser fließt vom Anschluß 20 des Moduls 10 durch einen ersten Rückflußverhinderer. Von diesem Rückflußverhinderer fließt das Wasser bei ausreichender Druckdifferenz zwischen Eingangs- und Ausgangsdruck durch ein Ablaßventil 60 mit einem Ablauf 62. Anschließend fließt das Wasser durch einen zweiten Rückflußverhinderer 64. Ein Druckminderer 66 sorgt für einen konstanten Ausgangsdruck der Anordnung. Der Druck wird mittels eines Manometers 68 gemessen. Das Wasser fließt anschließend vom Anschlußstutzen 54 und den Anschluß 22 zurück in die Anschlußarmatur 10.

Je nach Anforderungen an den Rohrtrenner - Typ BA oder Typ CA - können, wie in Fig. 9 dargestellt, Prüfstutzen 70 und 72 zur Überprüfung der Rückflußverhinderer vorgesehen sein.

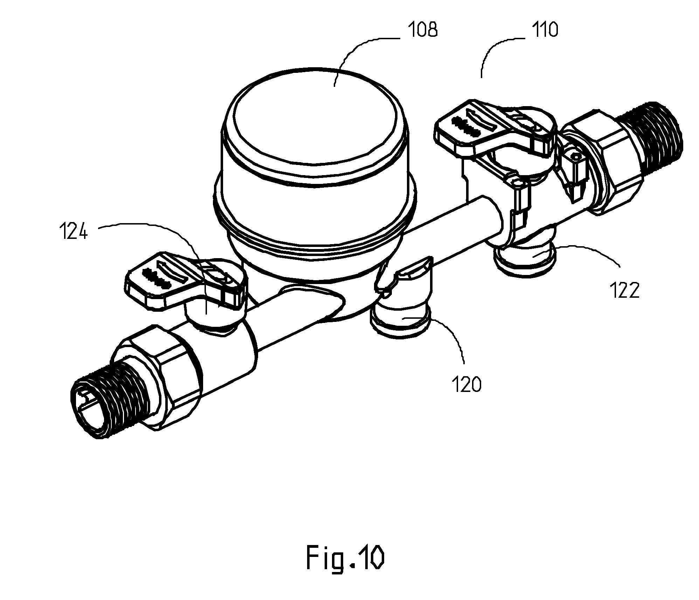

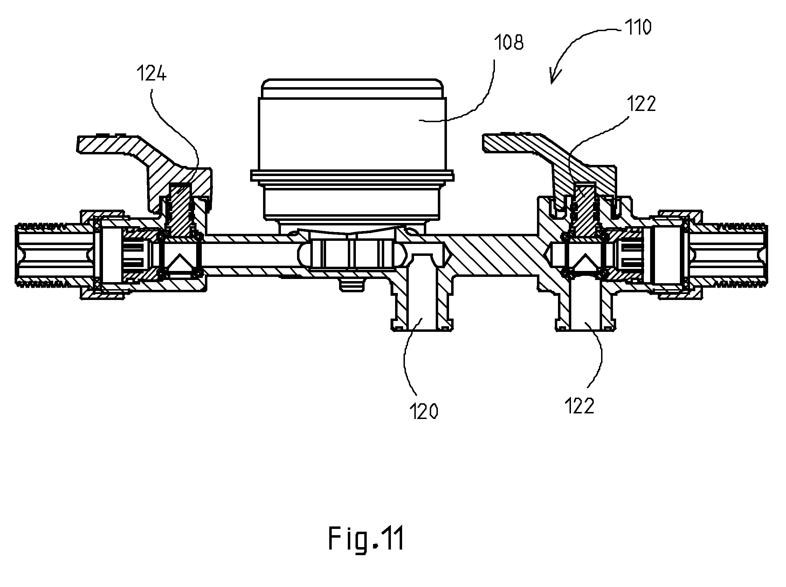

In den Figuren 10 bis 15 ist ein alternatives Ausführungsbeispiel dargestellt. Während die angeschlossenen Module II und III die gleichen wie im vorhergehenden Ausführungsbeispiel sind, ist das Modul I, die Anschlußarmatur 110 gegenüber der Anschlußarmatur 10 verändert. Zwischen dem Absperrhahn 124 und dem Anschluß 120 ist in der ansonsten gleich aufgebauten Armatur ein Wasserzähler 108 angeordnet. Der Abstand und die Geometrie der Anschlüsse 120 und 122 ist jedoch die gleiche, wie der Abstand und die Geometrie der Anschlüsse 20 und 22 der Anschlußarmatur 10. Entsprechend können die Module II und III ohne bauliche Veränderungen auch an dieses Modul angeschlossen werden.

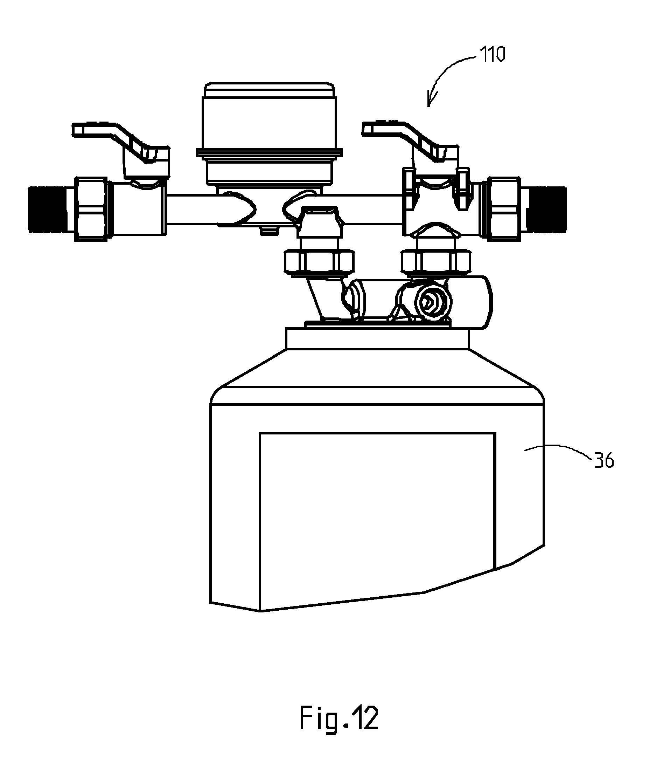

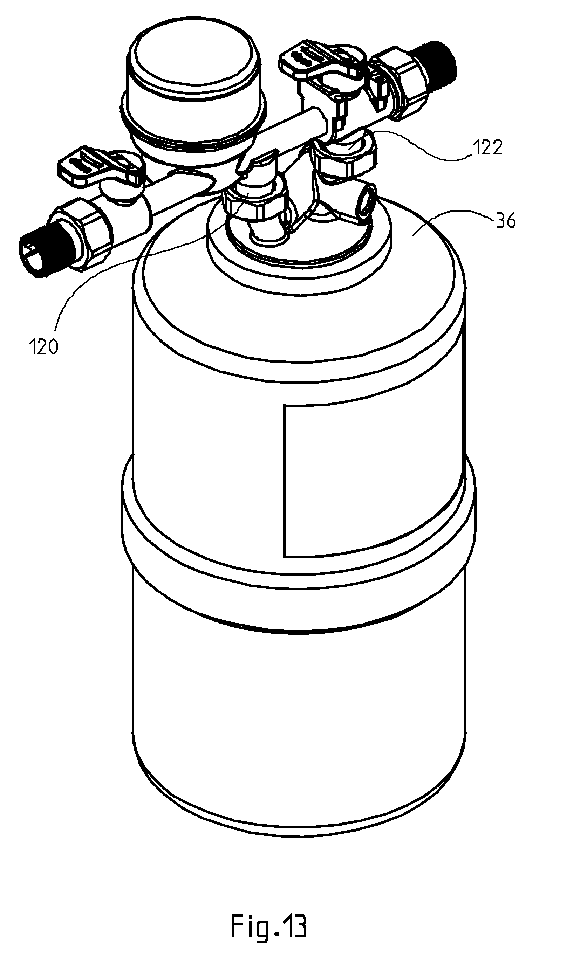

In Fig. 12 und Fig.13 ist dargestellt, wie eine Wasserenthärtungseinrichtung 36 (Modul III) an die Anschlüsse 120 und 122 angeschlossen ist. Die Wasserenthärtungseinrichtung 36 ist identisch mit der in Fig.3 bis 7 dargestellten Einrichtung.

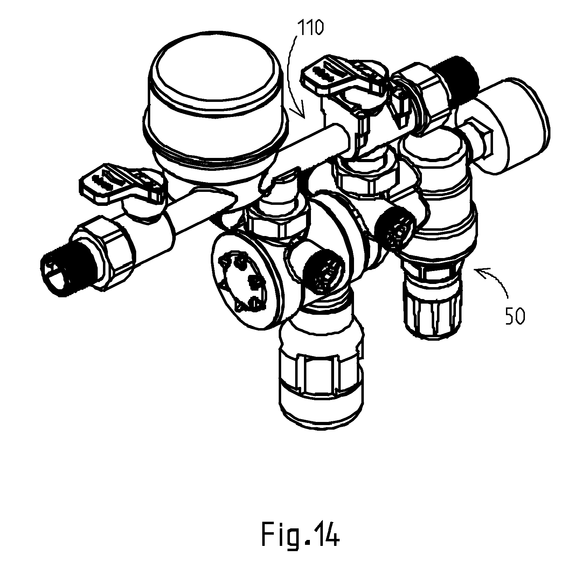

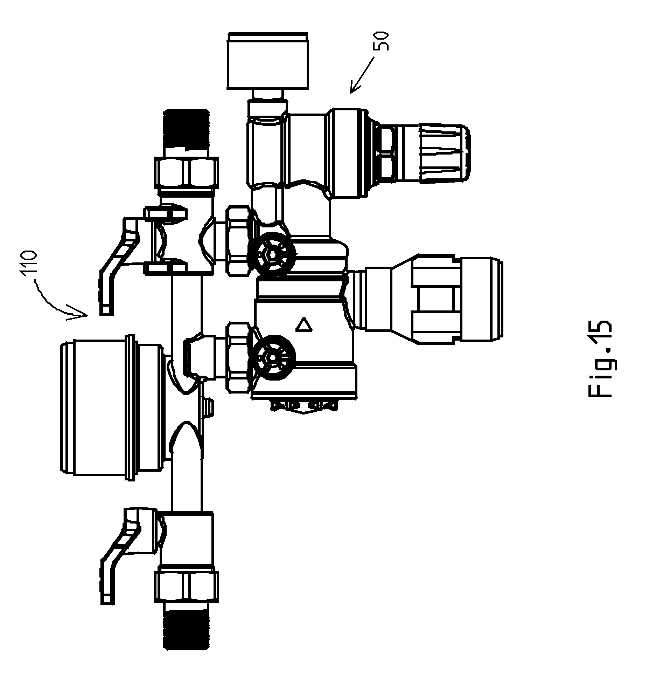

In Fig. 14 und Fig. 15 ist dargestellt, wie eine Rohrtrenneranordnung (Modul II) an die Anschlüsse 120 und 122 angeschlossen ist. Die Rohrtrenneranordnung 50 ist identisch mit der in Fig.8 und 9 dargestellten Anordnung.

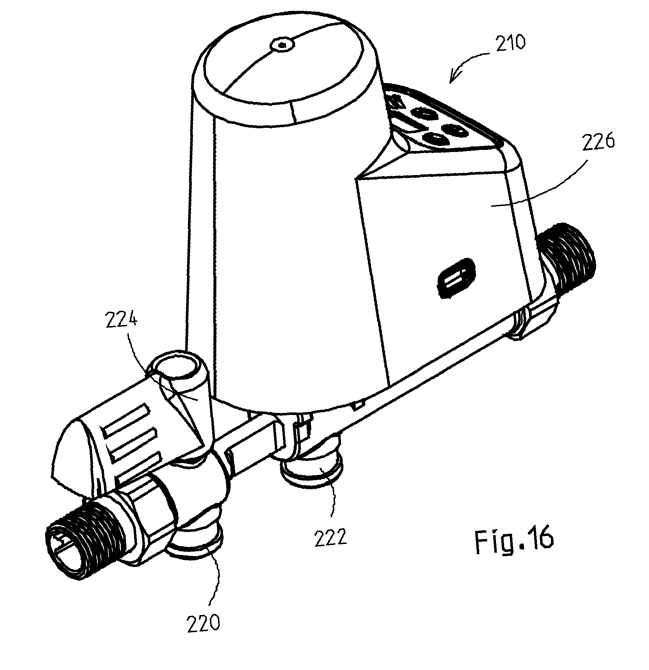

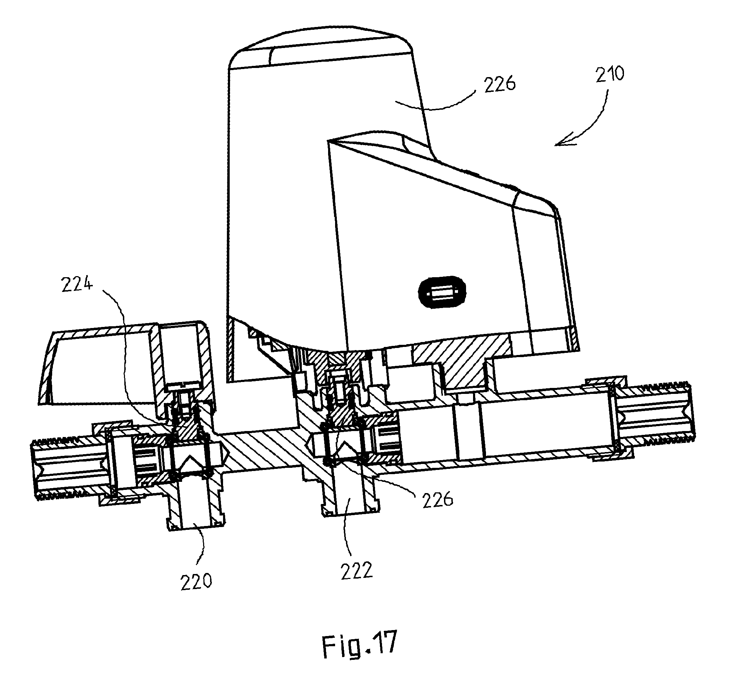

In den Figuren 16 bis 19 ist ein weiteres, alternatives Ausführungsbeispiel dargestellt. Während auch hier das angeschlossene Modul II das gleiche wie in den vorhergehenden Ausführungsbeispielen ist, ist das Modul I, die Anschlußarmatur 210 gegenüber der Anschlußarmatur 10 und 110 verändert. Das auslassseitige Absperrmittel 226 der ansonsten gleich aufgebauten Armatur ist als Absperrautomatik ausgebildet. Der Absperrhahn ist motorbetrieben. Auf diese Weise kann, z.B. bei Druckabfall im Heizungssystem, Wasser nachgefüllt werden, bis wieder ein ausreichender Druck vorliegt. Der Abstand und die Geometrie der Anschlüsse 220 und 222 ist jedoch die gleiche, wie der Abstand und die Geometrie der Anschlüsse 20 und 22 bzw. 120 und 122 der Anschlußarmatur 10 bzw.110. Entsprechend können die Module II und III ohne bauliche Veränderungen auch an dieses Modul angeschlossen werden.

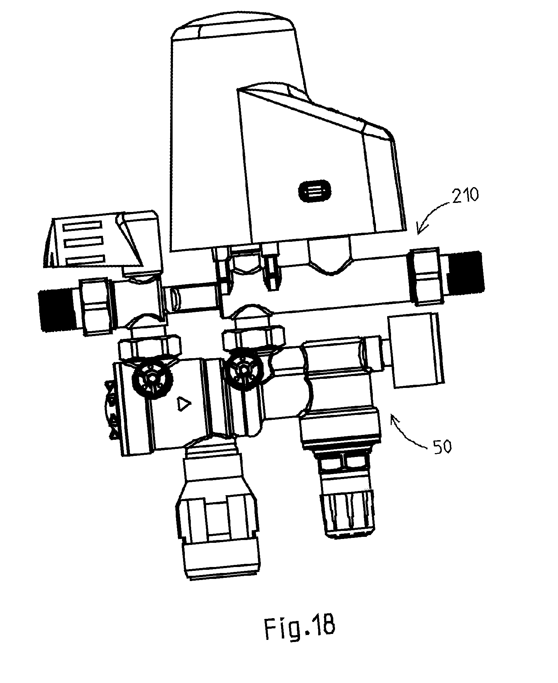

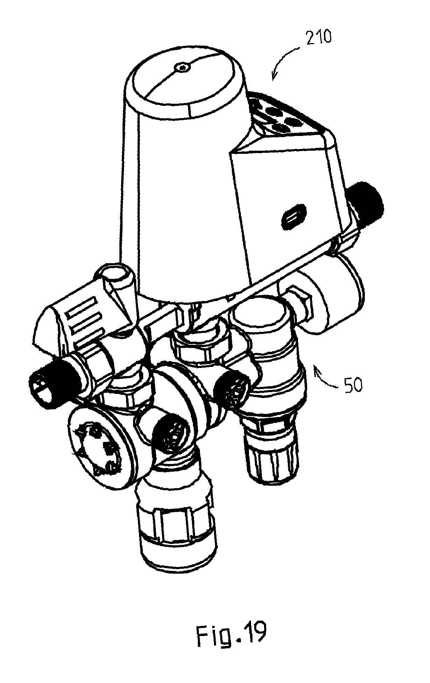

In Fig. 18 und Fig.19 ist dargestellt, wie eine Rohrtrenneranordnung (Modul II) an die Anschlüsse 220 und 222 angeschlossen ist. Die Rohrtrenneranordnung 50 ist identisch mit der in Fig.8 und 9, bzw. Fig.14 und 15 dargestellten Anordnung.

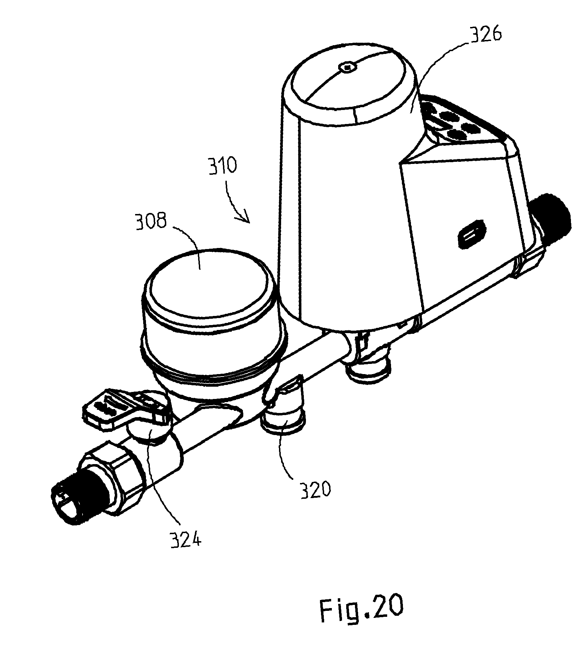

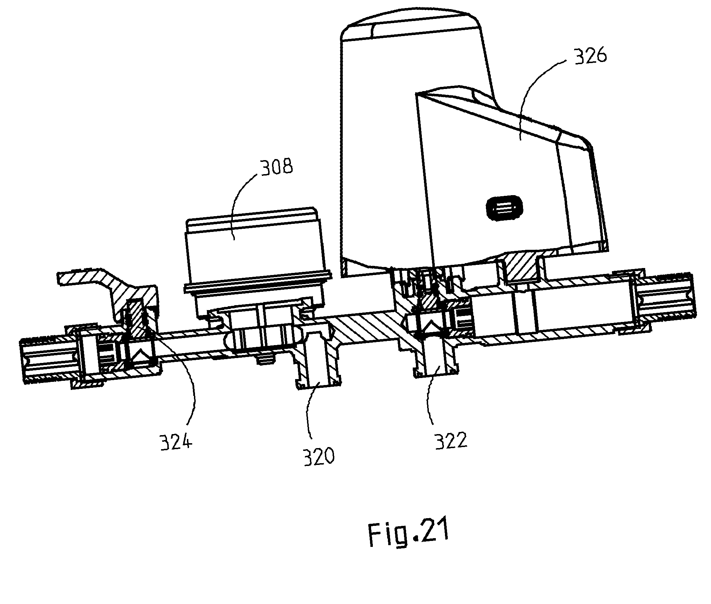

In den Figuren 20 bis 23 ist ein weiteres, alternatives Ausführungsbeispiel dargestellt. Während auch hier das angeschlossene Modul II das gleiche wie in den vorhergehenden Ausführungsbeispielen ist, ist das Modul I, die Anschlußarmatur 310 gegenüber der Anschlußarmatur 10, 110 und 210 verändert. Zwischen dem Absperrhahn 324 und dem Anschluß 320 ist in der ansonsten gleich aufgebauten Armatur ein Wasserzähler 308 angeordnet. Das auslassseitige Absperrmittel 326 der ansonsten gleich aufgebauten Armatur ist als Absperrautomatik ausgebildet. Der Absperrhahn ist motorbetrieben. Auf diese Weise kann, z.B. bei Druckabfall im Heizungssystem, Wasser nachgefüllt werden, bis wieder ein ausreichender Druck vorliegt. Der Abstand und die Geometrie der Anschlüsse 320 und 322 ist auch hier die gleiche, wie der Abstand und die Geometrie der Anschlüsse 20 und 22 der Anschlußarmatur 10 und der analogen Anschlüsse an den Anschlußarmaturen 110 und 210. Entsprechend können die Module II und III ohne bauliche Veränderungen auch an dieses Modul angeschlossen werden.

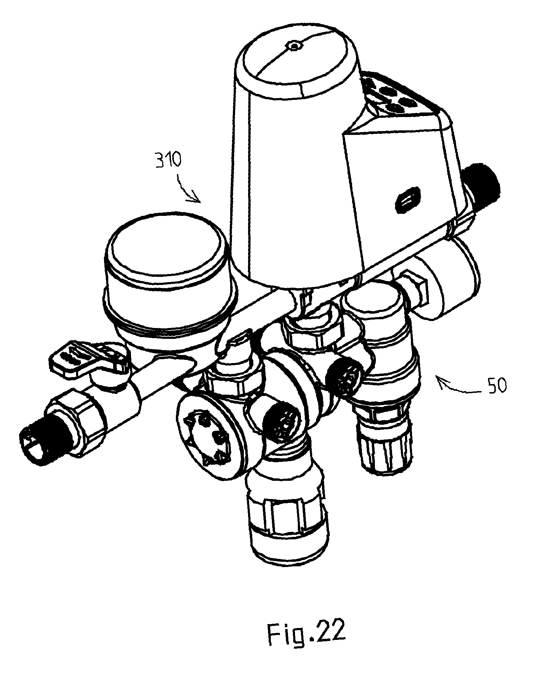

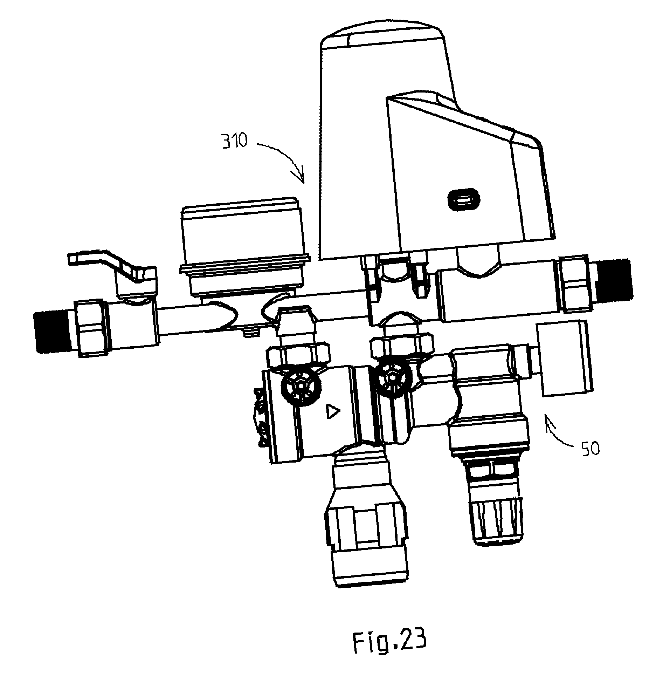

In Fig. 22 und Fig.23 ist dargestellt, wie eine Rohrtrenneranordnung (Modul II) an die Anschlüsse 320 und 322 angeschlossen ist. Die Rohrtrenneranordnung 50 ist identisch mit der in Fig.8 und 9, bzw. Fig.14 und 15 dargestellten Anordnung.

Die gezeigten Ausführungsbeispiele können untereinander auch kombiniert werden, wobei einmal Modul I mit Modul II und dahinter oder davor Modul I mit Modul III in die Rohrleitung eingebaut wird.

Man erkennt, daß die Anschlußarmatur in allen Ausführungsbeispielen mit unterschiedlichen Modulen zusammengesetzt werden können und dann unterschiedliche Funktionen haben. Dabei wird jedes Modul jeweils in unterschiedlichen Kombinationen mehrfach verwendet und kann in höheren Stückzahlen gefertigt werden.

## Patentansprüche

1. Modularer Armaturenbausatz zum Aufbau einer Armatur über welche ein Heizungssystem füll- oder nachfüllbar bzw. das Medium aufbereitbar ist bestehend aus
(I) einer Armatur (Modul I) (10, 110, 210, 310) zum Einbau in eine Rohrleitung, enthaltend
(a) einen Einlass (12), der mittels ersten Absperrmitteln (24, 124, 224, 324) absperrbar ist,
(b) einen Auslass (14) der mittels zweiten Absperrmitteln (26, 126, 226, 326) absperrbar ist
(c) ein nicht-strömungsführendes Verbindungsstück (28) zum Verbinden des Einlasses (14) mit dem Auslass (16) und
(d) Anschlüsse (20, 22; 120, 122; 220, 222; 320, 322), die zwischen den Absperrmitteln vorgesehen sind, an welchen ein weiteres Modul (36, 50) (Modul II oder Modul III) lösbar anschließbar ist;
(II) einem Rohrtrenner (50) (Modul II) und
(III) einer Wasserenthärtungseinrichtung (36) (Modul III) mit Anschlüssen, welche an die Anschlüsse der Armatur angepasst sind,
wobei der Rohrtrenner (50) und die Wasserenthärtungseinrichtung (36) Anschlüsse aufweisen, deren Abmessungen an die Anschlüsse der Armatur angepasst sind, so dass jedes Modul auf dem Strömungsweg zwischen den ersten (24, 124, 224, 324) und den zweiten Absperrmitteln (26, 126, 226, 326) angeordnet ist.

2. Armaturenbausatz nach Anspruch 1, **dadurch gekennzeichnet, daß** die Armatur (Modul I) mit einem Wasserzähler (108) versehen ist.

3. Armaturenbausatz nach Anspruch 2, **dadurch gekennzeichnet, daß** der Wasserzähler (108) zwischen den Absperrmitteln strömungsmäßig vor dem an der Armatur angeschlossenen Modul (II oder III) angeordnet ist.

4. Armaturenbausatz nach einem der vorgehenden Ansprüche, **dadurch gekennzeichnet, daß** die stromabwärtigen Absperrmittel (226) eine motorbetriebene Absperrung ist.

5. Armaturenbausatz nach einem der vorgehenden Ansprüche, **dadurch gekennzeichnet, daß** die Wasserenthärtungseinrichtung (Modul III) zweiteilig ausgebildet ist, wobei ein erstes Teil ein Verschneideventil (38) bildet, welches einerseits an die Anschlüsse der Armatur (Modul I) anschließbar ist, die mit einer steuerbaren Bypassleitung (46) verbunden sind, und andererseits Anschlüsse für ein zweites Teil der Wasserenthärtungseinrichtung aufweist, wobei das zweite Teil eine wasserenthärtende Einrichtung, insbesondere ein Ionentauscher ist.
